(19) Europäisches Patentamt / European Patent Office / Office européen des brevets

(11) **EP 4 243 167 A1**

(12) **EUROPEAN PATENT APPLICATION**
published in accordance with Art. 153(4) EPC

(43) Date of publication:
**13.09.2023 Bulletin 2023/37**

(21) Application number: **22860037.5**

(22) Date of filing: **28.06.2022**

(51) International Patent Classification (IPC):
*H01M 50/169* (2021.01)   *H01M 50/166* (2021.01)
*H01M 50/593* (2021.01)

(52) Cooperative Patent Classification (CPC):
H01M 10/0525; H01M 50/10; H01M 50/148;
H01M 50/166; H01M 50/169; H01M 50/186;
H01M 50/193; H01M 50/586; H01M 50/593;
Y02E 60/10

(86) International application number:
**PCT/CN2022/101822**

(87) International publication number:
**WO 2023/024690 (02.03.2023 Gazette 2023/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.08.2021   CN 202110995033**

(71) Applicant: **Contemporary Amperex Technology
Co., Limited
Ningde, Fujian 352100 (CN)**

(72) Inventors:
• **TANG, Binjie**
  Ningde, Fujian 352100 (CN)
• **ZHANG, Yongqiang**
  Ningde, Fujian 352100 (CN)
• **GE, Xiaoming**
  Ningde, Fujian 352100 (CN)
• **XU, Wenzhu**
  Ningde, Fujian 352100 (CN)

(74) Representative: **Feira, Edoardo
Kraus & Weisert
Patentanwälte PartGmbB
Thomas-Wimmer-Ring 15
80539 München (DE)**

(54) **BATTERY CELL AND BATTERY, DEVICE, PREPARATION METHOD, AND PREPARATION DEVICE RELATED THERETO**

(57)     The present application discloses a battery cell, and a battery, an apparatus, a preparation method and a preparation apparatus related to the same. The battery cell of the present invention comprises a case having an opening; and an end cover, used for covering the opening. The end cover comprises an end cover body and a support body, the end cover body is used for being welded and fixed to the case, the support body is disposed on the bottom surface of the end cover body and is disposed along the edge of the end cover body in the circumferential direction, and the support body is used for abutting against the inner side surface of the case. The battery cell according to the present invention can prolong the service life and enhance the safety.

FIG. 1

EP 4 243 167 A1

## Description

## Cross-Reference to Related Applications

The present application claims the priority of Chinese Patent Application No. 202110995033.4 filed on August 27, 2021 and entitled "BATTERY CELL AND BATTERY, APPARATUS, PREPARATION METHOD AND PREPARATION APPARATUS RELATED TO SAME", the entire content of which is incorporated herein by reference.

## Technical Field

The present application relates to the field of batteries, and more particularly, to a battery cell and a battery, an apparatus, a preparation method and a preparation apparatus related to the same.

## Background Art

Lithium ion batteries have the advantages of small size, high energy density, high power density, many cycles of use and long storage time, and are widely used in some electronic devices, electric vehicles, electric toys and electric devices. For example, lithium ion batteries are widely used in products such as mobile phones, laptop computers, battery vehicles, electric vehicles, electric planes, electric ships, electric toy cars, electric toy ships, electric toy planes, and electric tools.

In the development of the battery technology, in addition to improving the performance of the battery, the service life and safety are also the issues that cannot be ignored. If the service life of the battery does not reach an expected time, the maintenance and use of the battery will be very expensive. If the safety of the battery cannot be guaranteed, the battery cannot be used. In the prior art, the lithium ion battery typically comprises a battery case, a case end cover, and an electrode assembly. The electrode assembly is placed in the battery case, and the case end cover is fixedly connected to the battery case by means of laser welding. However, during use, the area of the battery case near the welding seam is often susceptible to tearing due to vibration, thereby shortening the service life and reducing the safety of the battery. Therefore, how to prolong the service life and enhance the safety of the batteries is an urgent technical problem to be solved in the battery technologies.

## Summary of the Invention

In view of the above problems, the embodiments of the present application propose a battery cell and a battery, an apparatus, a preparation method and a preparation apparatus related to the same to prolong the service life of the battery cell and enhance the safety of the battery cell.

According to the first aspect of the present application, a battery cell is provided, comprising a case having an opening; and an end cover used for covering the opening, wherein the end cover includes an end cover body and a support body, the end cover body is used for being welded and fixed to the case, the support body is disposed on the bottom surface of the end cover body and is disposed along the edge of the end cover body in the circumferential direction, and the support body is used for abutting against the inner side surface of the case.

In the above-mentioned embodiment, on the one hand, a heat-affected zone is supported by the support body when deformation occurs, which is able to produce a reverse support force on a deformation zone, thus effectively counteracting the deformation of the case; on the other hand, during the vibration of the battery cell, the support body also plays a role in buffering the external stress and the impact of an interior electrode assembly. In this way, by counteracting the deformation of the heat-affected zone and buffering the impact of the force on the heat-affected zone, not only can the flatness of the side walls of the case be improved, but also the tearing force of the heat-affected zone can be effectively reduced, thus effectively prolonging the service life and improving the safety of the battery cell.

In some embodiments, the end cover body is constructed as a plate structure with a preset thickness and the peripheral surface of the support body is parallel to the thickness direction of the end cover body and is used for abutting against the inner side surface of the case.

In the above embodiment, after the end cover body is welded and fixed to the case, the peripheral surface of the support body can be made to fit better with the inner side surface of the case, which can increase the support area of the support body to the case. In this way, the larger the support area, the more effectively the deformation of the heat-affected zone of the case can be counteracted, and at the same time, the buffering effect on the external stresses on the heat-affected zone can also be effectively improved.

In some embodiments, the support body includes a plurality of plate-like structures, the plurality of plate-like structures being disposed continuously in the circumferential direction of the end cover body and forming an annular structure for abutting against the inner side surface of the case.

In the above embodiment, it is possible to adapt the peripheral surface of the support body to the inner side surface of the case to increase the support area of the support body to the case.

In some embodiments, the support body and the end cover body are of an integrated structure.

In the above embodiments, the support body is able to eliminate the effect of a tear strip on 'butt seam welding' during the processing of the end cover body, making a weld seam tighter and ensuring no laser leakage during the welding process. In addition, the integrated structure omits the steps of positioning and fixing between the support body and the end cover body, thus effectively reducing the installation process between the components and effectively improving the overall structural strength of the end cover.

In some embodiments, the integrated structure is disposed as stamping forming or injection molding.

In the above embodiments, the stamping forming or injection molding can effectively ensure the quality of the mass production of the end cover, thus ensuring the uniformity of the battery cell structure.

In some embodiments, at least one groove is formed on the peripheral surface of the support body, the groove being used for being filled with colloid, the colloid being constructed to connect the support body and the case.

In the above embodiments, the colloid can compensate for a gap between the end cover body and the case, thus improving the sealing performance after the end cover is fixed to the case, so that the situation where the electrolyte solution inside the battery cell oozes or water vapor from the outside infiltrates can be effectively reduced.

In some embodiments, the colloid is used for sealing the gap between the support body and the case.

In the above-mentioned embodiment, on the one hand, the heat absorption effect of the hot-melt colloid can reduce the influence of the residual heat of welding on the heat-affected zone, thereby effectively enhancing the strength of the heat-affected zone, weakening the degree of reorientation of the heat-affected zone and enhancing the flatness of the side wall of the case; on the other hand, even if the heat-affected zone of the case breaks due to fatigue or is torn due to the impact of force, the adhesive sealing effect of the hot-melt colloid will still ensure that the battery cell is free of liquid leakage and water seepage, thus improving the safety and prolonging the service life of the battery cell through the hot-melt colloid.

In some embodiments, the groove is constructed as an annular groove formed on the peripheral surface of the support body, the center line of the annular groove being parallel to a thickness direction of the end cover body.

In the above embodiments, on the one hand, the annular groove can effectively seal an annular gap inherent between the end cover body and the case; on the other hand, the center line of the annular groove is parallel to the thickness direction of the end cover body so that the annular groove has the shortest circumference, thereby also saving the colloid used for filling to a certain extent.

In some embodiments, several grooves are formed on the peripheral surface of the support body, the several grooves being distributed at intervals in the thickness direction of the end cover body, each of the grooves being used for being filled with the colloid.

In the above embodiments, a plurality of annular sealing areas formed enables continuous sealing by means of other colloid when some of the colloid fails in sealing, thus effectively improving the sealing performance of a welding interface between the end cover and the case and further reducing the situation where the electrolyte solution inside the battery cell oozes or water vapor from the outside infiltrates.

In some embodiments, the material of the colloid is one selected from polyurethane, polyamide, polyester and copolyolefin.

In the above embodiments, the colloid is able to have better stability, chemical resistance, resilience and mechanical properties, as well as less compression deformation, thereby enabling the end cover applying the same to have a better vibration resisting and sealing effect after being fixedly connected to the case.

In some embodiments, an electrode assembly is further included, the electrode assembly being disposed within the case; the end cover further includes an insulating barrier layer, the insulating barrier layer being disposed on the bottom surface of the support body to isolate the support body from the surface of the electrode assembly facing the end cover body.

In the above embodiment, isolating the support body from contact with the electrode assembly avoids problems such as short circuiting and wear of the electrode assembly caused by the support body, thereby effectively ensuring the safety and service life of the battery cell.

In some embodiments, an electrode assembly is further included, the electrode assembly being disposed within the case; the end cover further includes an insulator, the insulator including a first insulator and a second insulator, the first insulator being attached to the bottom surface of the end cover body, the second insulator being connected to the first insulator and attached to the inner side surface of the support body, the second insulator exceeding the support body in a direction facing the electrode assembly.

In the above embodiment, a certain safety distance is formed between the support body and the electrode assembly to avoid contact between the support body and the electrode assembly, thus also avoiding problems such as short circuiting and wear of the electrode assembly caused by the support body, which effectively ensures the safety and service life of the battery cell.

In some embodiments, the insulator further includes a third insulator, the third insulator being connected to the peripheral wall of the second insulator and being at least partially located between the support body and the surface of the electrode assembly facing the end cover body.

In the above embodiments, it is possible to add the insulating protection of the third insulator on the basis of the second insulator, thereby ensuring the safety of the battery cell to the maximum extent and extending the service life of the battery cell.

According to the second aspect of the present application, a battery is provided, including the above-mentioned battery cell.

According to the third aspect of the present application, an apparatus is provided, including the above-mentioned battery, the battery being used for providing electric energy.

According to the fourth aspect of the present application, a preparation method for a battery cell is provided, including providing a case having an opening; and providing an end cover used for covering the opening, wherein the end cover includes an end cover body and a support body, the end cover body is used for being welded and fixed to the case, the support body is disposed on the bottom surface of the end cover body and is disposed along the edge of the end cover body in the circumferential direction, and the support body is used for abutting against the inner side surface of the case.

According to the fifth aspect of the present application, a preparation apparatus for a battery cell is provided, including a case preparation apparatus used for preparing a case, the case having an opening; and an end cover preparation apparatus used for preparing an end cover, the end cover being used for covering the opening, wherein the end cover includes an end cover body and a support body, the end cover body is used for being welded and fixed to the case, the support body is disposed on the bottom surface of the end cover body and is disposed along the edge of the end cover body in the circumferential direction, and the support body is used for abutting against the inner side surface of the case.

The above description is only a summary of the technical solutions of the embodiments of the present application. In order to be able to understand the technical means of the embodiments of the present application more clearly, the technical means can be implemented according to the content of the specification. Furthermore, to make the above and other objectives, features and advantages of the embodiments of the present application more comprehensible, specific implementations of the present application are exemplified below.

**Description of Drawings**

By reading the detailed summary of the preferred implementations below, various other advantages and benefits will become apparent to those of ordinary skill in the art. The drawings are for the purpose of illustrating the preferred implementations only and are not to be considered a limitation to the present application. Moreover, in all of the drawings, the same parts are indicated by the same reference numerals. In the drawings:

FIG. 1 is a schematic structural diagram of a first embodiment of a battery cell of the present application;
FIG. 2 is a schematic structural diagram of a second embodiment of the battery cell of the present application;
FIG. 3 is a schematic structural diagram of a third embodiment of the battery cell of the present application;
FIG. 4 is a schematic structural diagram of an end cover as shown in FIG. 1 to FIG. 3;
FIG. 5 is a bottom schematic structural diagram of an end cover as shown in FIG. 4:
FIG. 6 is a schematic flow chart of some embodiments of a preparation method for the battery cell of the present application; and
FIG.7 is a schematic diagram of system connection of some embodiments of a preparation apparatus for the battery cell of the present application.

**Detailed Description**

For the objects, technical solutions and advantages of the examples of the present application to be clearer, the technical solutions in the examples of the present application will be clearly and completely described below in conjunction with the drawings in the examples of the present application, and it is apparent that the described examples are a part of the examples of the present application rather than all the examples. Based on the embodiments in the present application, all other embodiments obtained by those of ordinary skill in the art without creative effort fall within the protection scope of the present application.

Unless otherwise defined, all technical and scientific terms used in this text have the same meanings as those commonly understood by those skilled in the art to which the present application belongs. The terms used in the specification of the application in this text are merely for the purpose of describing specific embodiments, but are not intended to limit the present application. The terms "comprising" and "having" and any variations thereof in the specification and the claims of the present application as well as the foregoing description of the drawings are intended to cover non-exclusive inclusions. The terms "first", "second", etc. in the specification and claims of the present application or in the above-mentioned drawings are used to distinguish different objects and are not intended to describe a particular order or relationship of precedence.

In the description of the present application, it should be understood that, the orientation or positional relationships indicated by the terms "central," "transverse," "length," "width," "upper," "lower," "front," "rear," "left," "right," "vertical," "horizontal," "top," "bottom," "inner," "outer," "axial," "radial," "circumferential," etc. are based on the orientation or positional relationships shown in the drawings and are only for facilitating the description of the present application and simplifying the description, rather than indicating or implying that the apparatus or element referred to must have a particular orientation or be constructed and operated in a particular orientation, and therefore will not be interpreted as limiting the present application.

In the description of the present application, it should be noted that the terms "mounting", "connecting", "connection" and "attachment" should be understood in a broad sense, unless otherwise explicitly specified or defined. For example, it may be a fixed connection, a detachable connection, or an integrated connection; and it may be a direct connection or an indirect connection through an intermediate medium, or may be a communication between the interior of two elements. For those of ordinary skill in the art, the specific meanings of the above terms in the present application can be understood according to specific situations.

Reference herein to an "embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In this text, the term "and/or" is only an association relationship for describing associated objects, indicating that three relationships may exist. For example, A and/or B may represent three situations: A exists alone, both A and B exist, and B exists alone. In addition, the character "/" herein generally means that the associated objects before and after it are in an "or" relationship.

In the present application, "a plurality of" means two or more (including two), similarly, "a plurality of groups" means two or more groups (including two groups), and "a plurality of sheets" means two or more sheets (including two sheets).

In the present application, the battery cell may comprise a lithium-ion secondary battery, a lithium-ion primary battery, a lithium-sulfur battery, a sodium/lithium-ion battery, a sodium-ion battery, a magnesium-ion battery, or the like, without limitation in the embodiments of the present application. The battery cell may be cylindrical, flat, rectangular, or in other shapes, which is also not limited in the embodiments of the present application. The battery cells are generally divided into three types according to packaging manners: cylindrical battery cells, rectangular battery cells, and pouch battery cells, which are not limited in the embodiments of the present application.

The battery cell includes an electrode assembly and an electrolyte, the electrode assembly being composed of a positive electrode sheet, a negative electrode sheet and a separator. The battery cell works mainly relying on the movement of metal ions between the positive electrode sheet and the negative electrode sheet. The positive electrode sheet includes a positive electrode current collector and a positive electrode active material layer. A surface of the positive electrode current collector is coated with the positive electrode active material layer. The current collector not coated with the positive electrode active material layer protrudes from the current collector coated with the positive electrode active material layer. The current collector not coated with the positive electrode active material layer serves as positive electrode tabs. Taking a lithium-ion battery as an example, the material of the positive electrode current collector may be aluminum, and the positive electrode active material may be lithium cobalt oxide, lithium iron phosphate, ternary lithium, lithium manganate, or the like. The negative electrode sheet includes a negative electrode current collector and a negative electrode active material layer. A surface of the negative electrode current collector is coated with the negative electrode active material layer. The current collector not coated with the negative electrode active material layer protrudes from the current collector coated with the negative electrode active material layer. The current collector not coated with the negative electrode active material layer serves as negative electrode tabs. The material of the negative electrode current collector may be copper, and the negative electrode active material may be carbon, silicon, or the like. In order to ensure that no fusing occurs when a large current passes, there are a plurality of positive electrode tabs which are stacked together, and there are a plurality of negative electrode tabs which are stacked together. The material of the isolating membrane may be PP, PE, or the like. In addition, the electrode assembly may be of a wound structure or a laminated structure, which is not limited in the embodiments of the present application. Many design factors, such as energy density, cycle life, discharge capacity, charge-discharge rate and other performance parameters, should be considered in the development of the battery technology. In addition, the safety of the battery also needs to be taken into account.

The battery mentioned in the embodiments of the present application refers to a single physical module including one or more battery cells to provide a higher voltage and capacity. For example, the battery mentioned in the present application may include a battery module, a battery pack, or the like. The battery generally comprises a box body for encapsulating one or more battery cells. The box body can prevent liquids or other foreign matters from affecting the charging or discharging of the battery cells.

The technical solutions described in the embodiments of the present application are all applicable to various apparatuses using batteries, such as mobile phones, portable devices, laptops, battery vehicles, electric toys, electric tools, electric vehicles, ships, spacecrafts, and the like. For example, the spacecrafts include airplanes, rockets, space shuttles, spaceships, etc.

In the prior art, a battery cell includes a battery case, a case end cover and an electrode assembly. The electrode assembly is placed in the battery case, and the case end cover is fixedly connected to the battery case by means of laser welding. Due to a large amount of residual heat generated at the time of welding, it is easy to cause the case to form a heat-affected zone in a region near a weld seam. Due to the high temperature in the heat-affected zone of the case, the case of the heat-affected zone is damaged intra-crystallinely and inter-crystallinely, the crystal lattice is distorted and the second kind of residual stress appears, which makes the plastic index drop sharply. At the same time, the material of the heat-affected zone of the case is anisotropic due to the occurrence of texture after heating, deformation occurs easily at the same time, and generally, the heat-affected zone of the case is deformed toward the inside of the case. The battery cells are liable to cause a tearing problem here during vibration, thereby reducing the service life and safety of the battery. At present, the main focus of the improvement after welding the case to the end cover lies in the sealing problem, i.e., to increase the sealing performance by adding a penetrating liquid to perform solidification at a weld seam of the end cover. However, after the end cover is welded, due to soldering tin, gaps and other reasons, it is difficult for the penetrating liquid to penetrate in, resulting in a poor sealing effect. In addition, adding the penetrating liquid to perform solidification to improve the sealing performance does not solve the common problem of vibrating tearing of the heat-affected zone of the end cover.

In view of this, the inventors of the present application have proposed a battery cell, and a design thereof, which can improve the service life and safety of the battery cell, will be described in detail below. It is to be understood that although the battery cell described in the embodiment of the present application is proposed based on the problem of medium-large power batteries, the battery cell described in the embodiment of the present application is also applicable to various apparatuses using batteries when the same problem exists.

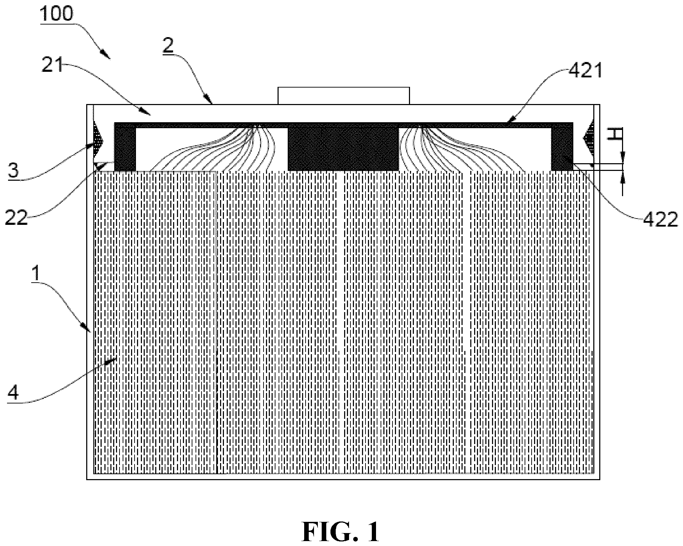

FIGS. 1 to 3 show the structure of some embodiments of a battery cell 100 according to embodiments of the present invention. As shown in FIGS. 1 to 3, the battery cell 100 includes a case 1 having an opening; and an end cover 2 used for covering the opening, wherein the end cover 2 includes an end cover body 21 and a support body 22, the end cover body 21 is used for being welded and fixed to the case 1, the support body 22 is disposed on the bottom surface of the end cover body 21 and is disposed along the edge of the end cover body 21 in the circumferential direction, and the support body 22 is used for abutting against the inner side surface of the case 1.

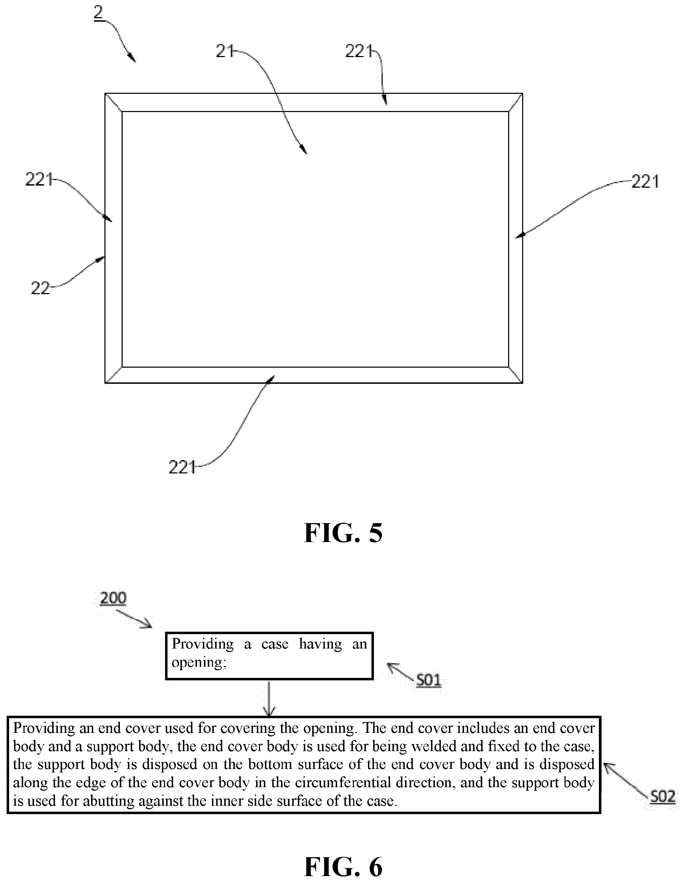

The opening of the case 1 mentioned in the present application is used for placing an electrode assembly 4 (as shown in FIG. 1) within the case 1, which is typically located at the top of the case 1. Covering mentioned in the present application refers to forming a complete case of the battery cell 100 by welding and fixing the end cover body 21 to the case 1. The bottom surface of the end cover body 21 mentioned in the present application refers to the surface of the end cover body 21 facing the inside of the case 1 after the end cover body 21 is fixed to the case 1. The disposing in the circumferential direction mentioned in the present application may be as shown in FIG. 5, which refers to that the support body 22 disposed on the bottom surface has a peripheral surface abutting against the inner side surface of the case 1, and the peripheral surface may be a continuously connected side surface or discontinuous side surfaces disposed at intervals. As mentioned in the present application, abutting means that the peripheral surface of the support body 22 fits with the inner side surface of the case 1.

In the battery cell 100 of the embodiment of the present invention, after welding and fixing the end cover body 21 to the case 1, the area of the case 1 near a weld seam forms a heat-affected zone. Due to the high temperature, the plasticity index of the material of the heat-affected zone sharply decreases. Usually, the material of the case 1 undergoes intra-crystalline and inter-crystalline damage, the crystal lattice is distorted, and a second type of residual stress occurs. Further, the material of the heat-affected zone of the case 1 exhibits anisotropy due to occurrence of texturing after heating, thereby easily causing deformation of the case 1. Generally, the heat-affected zone of the case 1 is deformed toward the inside of the case 1. This makes the existence of the heat-affected zone easily cause a tearing problem of the modified area of the case 1 during vibration of the battery cell 100, thereby reducing the service life and safety of the battery cell.

In the embodiment of the present invention, the support body 22 is disposed on the bottom surface of the end cover body 21. The support body 22 is disposed along the edge of the end cover body 21 in the circumferential direction and abuts with the inner side surface of the case 1 by means of the peripheral surface. In this way, on the one hand, the heat-affected zone is supported by the support body 22 when deformation occurs, which is able to produce a reverse support force on a deformation zone, thus effectively counteracting the deformation of the case 1; on the other hand, during the vibration of the battery cell 100, the support body 22 also plays a role in buffering the external stress and the impact of an interior electrode assembly. Due to disposing in this way, by counteracting the deformation of the heat-affected zone and buffering the impact of the force on the heat-affected zone, not only can the flatness of the side walls of the case 1 be improved, but also the tearing force of the heat-affected zone can be effectively reduced, thus effectively prolonging the service life and improving the safety of the battery cell 100.

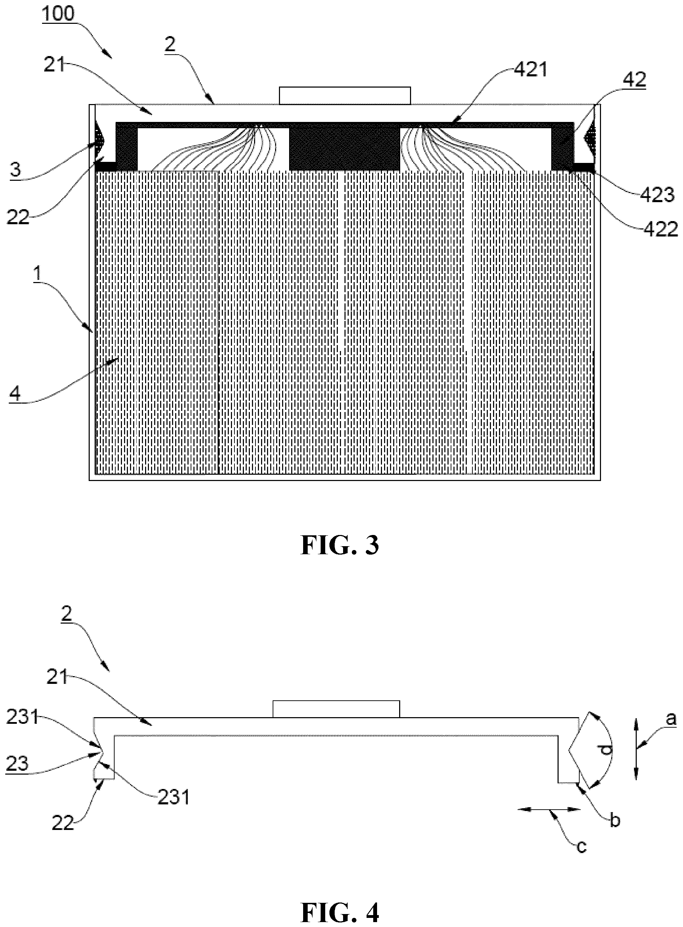

In some preferred embodiments, as shown in FIG. 4, the end cover body 21 may be constructed as a plate structure with a preset thickness and the peripheral surface of the support body 22 is parallel to a thickness direction a of the end cover body 21 and is used for abutting against the inner side surface of the case 1. The preset thickness mentioned in the present application means that the thickness of the end cover body 21 may vary depending on the difference of the size of the battery cell 100, and the preset thickness thereof is the thickness that satisfies the welding needs of the end cover body 21 and the case 1, and is not specifically limited here. The thickness direction a mentioned in the present application can be shown in combination with FIG. 4. In the present application, the peripheral surface of the support body 22 is parallel to the thickness direction a of the end cover body 21, which allows the peripheral surface of the support body 22 to fit better with the inner side surface of the case 1 after the end cover body 21 is welded and fixed to the case 1, thus directly increasing the area of the support body 22 abutting against the case 1 (as shown in combination with FIG. 1) and thus further increasing the support area of the support body 22 to the case 1. Due to disposing in this way, the larger the support area, the more effectively the deformation of the heat-affected zone of the case 1 can be counteracted, and at the same time, the buffering effect on the external stresses on the heat-affected zone can also be effectively improved.

In some preferred embodiments, in combination with FIG. 5, the support body 22 may include a plurality of plate-like structures 221, the plurality of plate-like structures 221 being able to be disposed continuously in the circumferential direction of the end cover body 21 and forming an annular structure for abutting against the inner side surface of the case 1.

The plate-like structure 221 mentioned in the present application should be understood as a plate body with a preset thickness, in combination with FIG. 4, a thickness direction c of the plate body is perpendicular to the thickness direction a of the end cover body 21 At the same time, the plate-like structure 221 may be understood as a flat plate or a curved plate, the flat or curved surface being defined specifically according to the shape of the inner side surface of the case 1. For example, in the embodiment in the present application, when the inner side surface of the case 1 is a flat surface, the plate-like structure 221 should be constructed as a flat plate body (in combination with FIG. 5); when the inner side surface of the case 1 is a curved surface, the plate-like structure 221 should be constructed as a curved plate body, so that the peripheral surface of the support body 22 is adapted to the inner side surface of the case 1 to increase the support area of the support body 22 to the case 1.

In some preferred embodiments, the support body 22 and the end cover body 21 may be of an integrated structure. The integrated structure mentioned in the present application should be understood that the support body 22 and the end cover body 21 are non-detachably connected. For example, the support body 22 and the end cover body 21 can be processed in a manner of integrally forming. Due to disposing in this way, on the one hand, the processing manner of integrated forming enables the support body 22 to be constructed as a part of the end cover body 21, e.g., the support body 22 can be constructed as a flanged part of the end cover body 21 facing the interior of the case 1. In this way, during the processing of the end cover body 21, the flanged part can make the position of a tear strip b not affect the welding of the end cover body 21 to the case 1 (in combination with FIG. 4), i.e., the influence of the tear strip on 'butt seam welding' is eliminated, making a weld seam tighter and ensuring no laser leakage during the welding process; on the other hand, the integrated structure omits the steps of positioning and fixing between the support body 22 and the end cover body 21, thus effectively reducing the installation process between the components and effectively improving the overall structural strength of the end cover 2.

In some preferred embodiments, the integrated structure may be disposed as stamping forming or injection molding. That is, the end cover 2 of the embodiment of the present invention is integrally processed by using a die and a corresponding stamping device or injection molding device. Due to disposing in this way, the stamping forming or injection molding can effectively ensure the quality of the mass production of the end cover 2, thus ensuring the uniformity of the structure of the battery cell 100.

In some preferred embodiments, in combination with FIG. 1 to FIG. 4, at least one groove 23 can be formed on the peripheral surface of the support body 22, the groove 23 being used for being filled with colloid 3, the colloid 3 being constructed to connect the support body 22 and the case 1. The groove 23 mentioned in the present application should be understood as a structure having a certain accommodating depth in the thickness direction c of the support body 22, and at the same time, the depth should be such that the colloid 3, after being filled into the groove 23, can be connected to the case 1 when the end cover body 21 is welded and fixed to the case 1. Due to disposing in this way, the colloid 3 can compensate for a gap between the end cover body 21 and the case 1, thus improving the sealing performance after the end cover 2 is fixed to the case 1, so that the situation where the electrolyte solution inside the battery cell 100 oozes or water vapor from the outside infiltrates can be effectively reduced.

In some preferred embodiments, the colloid 3 may be used for sealing the gap between the support body 22 and the case 1. The colloid 3 mentioned in the present application may be a hot-melt colloid 3. Due to disposing in this way, on the one hand, the heat absorption effect of the hot-melt colloid 3 can reduce the influence of the residual heat of welding on the heat-affected zone when the end cover 2 is welded and fixed to the case 1, thereby effectively enhancing the strength of the heat-affected zone, weakening the degree of reorientation of the heat-affected zone and enhancing the flatness of the side wall of the case 1; on the other hand, even if the heat-affected zone of the case 1 breaks due to fatigue or is torn due to the impact of force, the adhesive sealing effect of the hot-melt colloid 3 will still ensure that the battery cell 100 is free of liquid leakage and water seepage, thus improving the safety and prolonging the service life of the battery cell 100 through the hot-melt colloid 3.

In some preferred embodiments, the groove 23 may be constructed as an annular groove 23 formed on the peripheral surface of the support body 22, the center line of the annular groove 23 being parallel to the thickness direction a of the end cover body 21. The annular groove 23 in the present application refers to a continuous groove 23 formed along the peripheral surface of the support body 22. Due to disposing in this way, on the one hand, the annular groove 23 can effectively seal an annular gap inherent between the end cover body 21 and the case 1; on the other hand, the center line of the annular groove 23 is parallel to the thickness direction a of the end cover body 21 so that the annular groove 23 has the shortest circumference, thereby also saving the colloid 3 used for filling to a certain extent.

In some preferred embodiments, several grooves 23 may be formed on the peripheral surface of the support body 22, the several grooves 23 being distributed at intervals in the thickness direction a of the end cover body 21, each groove 23 being used for being filled with the colloid 3. The several grooves 23 mentioned in the present application can be understood as a plurality of annular grooves 23 distributed on the peripheral surface of the support body 22 in the thickness direction a of the end cover body 21 at intervals. Due to disposing in this way, the grooves 23 after being filled with the colloid 3 can form a plurality of annular sealing areas. After the end cover body 21 is welded and fixed to the case 1, the plurality of formed annular sealing areas enables continuous sealing by means of other colloid 3 when some of the colloid 3 fails in sealing, thus effectively improving the sealing performance of a welding interface between the end cover 2 and the case 1 and further reducing the situation where the electrolyte solution inside the battery cell 100 oozes or water vapor from the outside infiltrates.

In some preferred embodiments, in combination with FIG. 4, the two side surfaces of the groove 23 may be constructed as inclined surfaces 231, and an included angle d between the inclined surfaces 231 may range from 30 degrees to 60 degrees, preferably 45 degrees. Due to disposing in this way, after the hot-melt colloid 3 filled in the groove 23 is heated and melted, the inclined surface 231 allows the colloid 3 to have better fluidity, thus enabling the gap between the end cover 2 and the case 1 to be filled and sealed more quickly.

In some preferred embodiments, the material of the colloid 3 may be one selected from polyurethane, polyamide, polyester and copolyolefin. The material of the colloid 3 in the present application can be one of polyurethane, polyamide, polyester, and copolyolefin, or a material obtained by means of modification, polymerization, etc. of one of polyurethane, polyamide, polyester, copolyolefin, etc. Similarly, other materials of the hot-melt colloid 3 not listed in the above materials can also be used, as long as the colloid 3 can be subjected to a certain temperature and then melt and fill and seal the gap, namely, the needs of the present application can be met. By selecting the above-mentioned material, the colloid 3 of the present application is able to have better stability, chemical resistance, resilience and mechanical properties, as well as less compression deformation, thereby enabling the end cover 2 applying the same to have a better vibration resisting and sealing effect after being fixedly connected to the case 1.

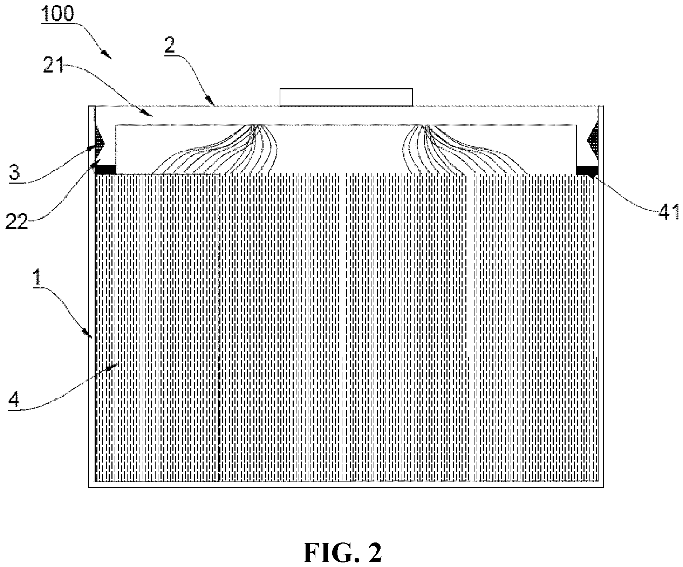

In some preferred embodiments, as shown in FIGS. 1 to 3, the battery cell 100 further includes an electrode assembly 4, the electrode assembly 4 being disposed within the case 1. In a second embodiment of the battery cell 100 of the present invention as shown in FIG. 2, the end cover 2 may further include an insulating barrier layer 41, the insulating barrier layer 41 being disposed on the bottom surface of the support body 22 to isolate the support body 22 from the surface of the electrode assembly 4 facing the body of the end cover 2.

The insulating barrier layer 41 in the present application may be an insulating rubber mat, which may be fixed to the bottom surface of the support body 22 by means of adhesion, and which is used for isolating the support body 22 from the electrode assembly 4. The insulating barrier layer 41 in the present application may be disposed to abut against the electrode assembly 4 or may be disposed not abutting against the electrode assembly. Due to disposing in this way, isolating the support body 22 from contact with the electrode assembly 4 avoids problems such as short circuiting and wear of the electrode assembly 4 caused by the support body 22, thereby effectively ensuring the safety and service life of the battery cell 100.

In some preferred embodiments, as shown in FIGS. 1 to 3, the battery cell 100 may further include an electrode assembly 4, the electrode assembly 4 being disposed within the case 1. In the first embodiment of the battery cell 100 of the present invention as shown in FIG. 1, the end cover 2 may further include an insulator 42, and the insulator 42 may include a first insulator 421 and a second insulator 422, the first insulator 421 being attached to the bottom surface of the end cover body 21, the second insulator 422 being connected to the first insulator 421 and attached to the inner side surface of the support body 22, the second insulator 422 exceeding the support body 22 in the direction facing the electrode assembly 4.

The first insulator 421 mentioned in the present application may be fixed to the bottom surface of the end cover body 21 by means of adhesion, so that the bottom surface of the end cover body 21 is insulated. The second insulator 422 mentioned in the present application exceeding the support body 22 in the direction facing the electrode assembly 4 means that after the end cover 2 is fixed to the case 1, a gap is formed between the surface of the support body 22 facing the electrode assembly 4 and the electrode assembly 4, i.e., a certain safety distance H is maintained (as shown in FIG. 1).

The formula for calculating the safety distance H mentioned in the present application can be:

$$GapC\text{-}J = dA\text{-}C * 4.5\sigma A\text{-}C + dS\text{-}C * 4.5\sigma S\text{-}C;$$

wherein GapC-J is the safety distance H between the support body 22 and the electrode assembly 4; dA-C is the Overhang polar difference between a negative electrode sheet and a positive electrode sheet; $\alpha$A-C is the Overhang manufacturing fluctuation variance between the negative electrode sheet and the positive electrode sheet; dS-C is the Overhang polar difference between the separator and the negative electrode sheet; and $\sigma$S-C is the Overhang manufacturing fluctuation variance between the separator and the negative electrode sheet. Overhang mentioned in the present application refers to the portion where the length and width of the negative electrode sheet go beyond the electrode sheet of the positive electrode sheet and the negative electrode sheet.

Due to disposing above, the certain safety distance H is formed between the support body 22 and the electrode assembly 4 to avoid contact between the support body 22 and the electrode assembly 4, thus also avoiding problems such as short circuiting and wear of the electrode assembly 4 caused by the support body 22, which effectively ensures the safety and service life of the battery cell 100.

In a third embodiment of the battery cell 100 of the present invention as shown in FIG. 3, the insulator 42 may further include a third insulator 423, the third insulator 423 being connected to the peripheral wall of the second insulator 422 and being at least partially located between the support body 22 and the surface of the electrode assembly 4 facing the body of the end cover 2. The third insulator 423 mentioned in the present application being at least partially located between the support body 22 and the surface of the electrode assembly 4 facing the body of the end cover 2 can be understood as that the third insulator 423 is able to partially fill the gap formed between the surface of the support body 22 facing the electrode assembly 4 and the electrode assembly 4, or to fill the gap completely, i.e., as in the embodiment shown in FIG. 3. Due to disposing in this way, it is possible to add the insulating protection of the third insulator 423 on the basis of the second insulator 422, thereby ensuring the safety of the battery cell 100 to the maximum extent and extending the service life of the battery cell 100.

The present invention further provides a battery, including the above-mentioned battery cell 100. In the present application, the battery may include one or more battery cells 100, the plurality of battery cells 100 may be in series connection, in parallel connection, or in parallel-series connection to meet different using requirements for electric energy. The battery may also include a box body, the box body being hollow inside and used for accommodating one or more battery cells 100. The box body may also have different shaped dimensions depending on the shape, number, combination mode and other requirements of the battery cells 100 accommodated. Similar to the description above regarding the case 1 of the battery cell 100, the box body for the battery can be made of two parts buckled together to form a closed structure.

The present invention further provides an electrical apparatus, including the above-mentioned battery, the battery being used for supplying electrical energy. In the present application, the electrical apparatus may be, for example, a vehicle, the vehicle may be a fuel vehicle, a gas vehicle, or a new energy vehicle, and the new energy vehicle may be an all-electric vehicle, a hybrid vehicle, or an extended-range electric vehicle. The battery is disposed in the vehicle, or the battery may be disposed at the bottom of the vehicle or the head or tail of the vehicle. The vehicle may have a motor, a controller and a battery, the battery being used for providing electrical power to the vehicle and the battery being controlled via the controller to power the motor to operate the motor, thereby driving the wheels or other components of the vehicle to work.

It should be understood by those skilled in the art that the electrical apparatus can also be other apparatuses that contain batteries and are powered by the batteries, such as mobile phones, portable devices, laptop computers, battery vehicles, electric cars, ships, spacecraft, electric toys and electric tools. The spacecraft includes airplanes, rockets, space shuttles, spaceships, and the like. The electric toy includes fixed or mobile electric toys, such as game consoles, electric car toys, electric ship toys and electric aircraft toys. The electric tool includes electric tools for metal cutting, electric tools for grinding, electric tools for assembly and electric tools for railways, such as electric drills, electric grinders, electric wrenches, electric screwdrivers, electric hammers, electric impact drills, concrete vibrators and electric planers. In other embodiments, the battery may also serve as an operating power source for the electrical apparatus, a circuitry for the electrical apparatus, e.g., for operating power requirements for starting, navigating, and running the vehicle; alternatively, the battery may also serve as a drive power source for the electrical apparatus, replacing or partially replacing fuel or natural gas to provide drive power for the electrical apparatus.

FIG. 6 shows a flow chart of a preparation method 200 for the battery cell 100 according to the present invention. In combination with FIG. 6, the preparation method 200 for the battery cell 100 includes: S01, providing a case 1 having an opening; and S02, providing an end cover 2 used for covering the opening. The end cover 2 includes an end cover body 21 and a support body 22, the end cover body 21 is used for being welded and fixed to the case 1, the support body 22 is disposed on the bottom surface of the end cover body 21 and is disposed along the edge of the end cover body 21 in the circumferential direction, and the support body 22 is used for abutting against the inner side surface of the case 1.

In the embodiment of the present invention, the support body 22 is disposed on the bottom surface of the end cover body 21. The support body 22 is disposed along the edge of the end cover body 21 in the circumferential direction and abuts with the inner side surface of the case 1 by means of the peripheral surface. In this way, on the one hand, the heat-affected zone is supported by the support body 22 when deformation occurs, which is able to produce a reverse support force on a deformation zone, thus effectively counteracting the deformation of the case 1; on the other hand, during the vibration of the battery cell 100, the support body 22 also plays a role in buffering the external stress and the impact of an interior electrode assembly. Due to disposing in this way, by counteracting the deformation of the heat-affected zone and buffering the impact of the force on the heat-affected zone, not only can the flatness of the side walls of the case 1 be improved, but also the tearing force of the heat-affected zone can be effectively reduced, thus effectively prolonging the service life and improving the safety of the battery cell 100.

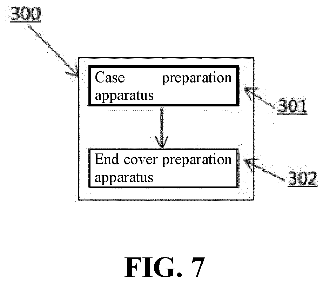

FIG. 7 shows a schematic diagram of system connection of a preparation apparatus 300 for the battery cell 100 according to the present invention. In combination with FIG. 7, the preparation apparatus 300 for the battery cell 100 includes a case preparation apparatus 301 used for preparing a case 1, the case 1 having an opening; and an end cover preparation apparatus 302 used for preparing an end cover 2, the end cover 2 being used for covering the opening, wherein the end cover 2 includes an end cover body 21 and a support body 22, the end cover body 21 is used for being welded and fixed to the case 1, the support body 22 is disposed on the bottom surface of the end cover body 21 and is disposed along the edge of the end cover body 21 in the circumferential direction, and the support body 22 is used for abutting against the inner side surface of the case 1.

Finally, it should be noted that the above embodiments are merely used for illustrating rather than limiting the technical solutions of the present application. Although the present application has been described in detail with reference to the above-mentioned embodiments, those of ordinary skill in the art should understand that the technical solutions recorded in the above various embodiments can still be modified, or some of the technical features therein can be equivalently substituted. However, such modifications or substitutions do not make the essence of the corresponding technical solutions depart from the spirit and scope of the technical solutions of the various embodiments of the present application.

**Claims**

1. A battery cell, comprising:

   a case having an opening; and
   an end cover used for covering the opening;
   wherein the end cover comprises an end cover body and a support body, the end cover body is used for being welded and fixed to the case, the support body is disposed on the bottom surface of the end cover body and is disposed along the edge of the end cover body in the circumferential direction, and the support body is used for abutting against the inner side surface of the case.

2. The battery cell according to claim 1, wherein the end cover body is constructed as a plate structure with a preset thickness, and the peripheral surface of the support body is parallel to a thickness direction of the end cover body and is used for abutting against the inner side surface of the case.

3. The battery cell according to claim 2, wherein the support body comprises a plurality of plate-like structures, the plurality of plate-like structures being disposed continuously in the circumferential direction of the end cover body and forming an annular structure for abutting against the inner side surface of the case.

4. The battery cell according to any one of claims 1-3, wherein the support body and the end cover body are of an integrated structure.

5. The battery cell according to claim 4, wherein the integrated structure is disposed as stamping forming or injection molding.

6. The battery cell according to any one of claims 1-5, wherein at least one groove is formed on the peripheral surface of the support body, the groove being used for being filled with colloid, the colloid being constructed to connect the support body and the case.

7. The battery cell according to claim 6, wherein the colloid is used for sealing a gap between the support body and the case.

8. The battery cell according to claim 6 or 7, wherein the groove is constructed as an annular groove formed on the peripheral surface of the support body, the center line of the annular groove being parallel to the thickness direction of the end cover body.

9. The battery cell according to claim 8, wherein several grooves are formed on the peripheral surface of the support body, the several grooves being distributed at intervals in the thickness direction of the end cover body, each of the grooves being used for being filled with the colloid.

10. The battery cell according to any one of claims 6-9, wherein the material of the colloid is one selected from polyurethane, polyamide, polyester and copolyolefin.

11. The battery cell according to any one of claims 1-10, further comprising an electrode assembly, wherein the electrode assembly is disposed within the case; and the end cover further comprises an insulating barrier layer, the insulating barrier layer being disposed on the bottom surface of the support body to isolate the support body from the surface of the electrode assembly facing the end cover body.

12. The battery cell according to any one of claims 1-10, further comprising an electrode assembly, wherein the electrode assembly is disposed within the case; and the end cover further comprises an insulator, the insulator comprising a first insulator and a second insulator, the first insulator being attached to the bottom surface of the end cover body, the second insulator being connected to the first insulator and attached to the inner side surface of the support body, the second insulator exceeding the support body in a direction facing the electrode assembly.

13. The battery cell according to claim 12, wherein the insulator further comprises a third insulator, the third insulator being connected to the peripheral wall of the second insulator and being at least partially located between the support body and the surface of the electrode assembly facing the end cover body.

14. A battery, comprising the battery cell according to any one of claims 1-13.

15. An apparatus, comprising the battery according to claim 13, the battery being used for providing electric energy.

16. A preparation method for a battery cell, comprising:

providing a case having an opening; and providing an end cover used for covering the opening;
wherein the end cover comprises an end cover body and a support body, the end cover body is used for being welded and fixed to the case, the support body is disposed on the bottom surface of the end cover body and is disposed along the edge of the end cover body in the circumferential direction, and the support body is used for abutting against the inner side surface of the case.

17. A preparation apparatus for a battery cell, comprising:

a case preparation apparatus used for preparing a case, the case having an opening; and an end cover preparation apparatus used for preparing an end cover, the end cover being used for covering the opening;
wherein the end cover comprises an end cover body and a support body, the end cover body is used for being welded and fixed to the case, the support body is disposed on the bottom surface of the end cover body and is disposed along the edge of the end cover body in the circumferential direction, and the support body is used for abutting against the inner side surface of the case.

**FIG. 1**

FIG. 2

**FIG. 3**

**FIG. 4**

2

21

221

221

221

22

221

**FIG. 5**

200

Providing a case having an opening;

S01

Providing an end cover used for covering the opening. The end cover includes an end cover body and a support body, the end cover body is used for being welded and fixed to the case, the support body is disposed on the bottom surface of the end cover body and is disposed along the edge of the end cover body in the circumferential direction, and the support body is used for abutting against the inner side surface of the case.

S02

**FIG. 6**

FIG. 7

## INTERNATIONAL SEARCH REPORT

| International application No. |
| --- |
| **PCT/CN2022/101822** |

**A.    CLASSIFICATION OF SUBJECT MATTER**

H01M 50/169(2021.01)i;  H01M 50/166(2021.01)i;  H01M 50/593(2021.01)i

According to International Patent Classification (IPC) or to both national classification and IPC

**B.    FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI: 电池, 盖, 壳, 容器, 外缘, 外周, 边缘, 焊, 接触, 突出, 凸, 槽, 沟, 绝缘, battery, cover, lid, cap, shell, case, edge, periphery, weld, connect, extrude, protrude, groove, insulator, isolator

**C.    DOCUMENTS CONSIDERED TO BE RELEVANT**

| Category* | Citation of document, with indication, where appropriate, of the relevant passages | Relevant to claim No. |
| --- | --- | --- |
| X | JP 2019084540 A (TOYOTA MOTOR CORP.) 06 June 2019 (2019-06-06) description, paragraphs 2-3 and 13-27, and figures 1-4 | 1, 2, 4, 5, 11, 14-17 |
| Y | JP 2019084540 A (TOYOTA MOTOR CORP.) 06 June 2019 (2019-06-06) description, paragraphs 2-3 and 13-27, and figures 1-4 | 3, 6-10, 12-13 |
| Y | CN 211907489 U (EVE ENERGY CO., LTD.) 10 November 2020 (2020-11-10) description, paragraphs 39-52, and figures 1-4 | 3 |
| Y | CN 104685661 A (ROBERT BOSCH CO., LTD.) 03 June 2015 (2015-06-03) description, paragraphs 25-37, and figures 1-3 | 6-10 |
| Y | JP 2018190591 A (TOYOTA MOTOR CORP.) 29 November 2018 (2018-11-29) description, paragraphs 11-30, and figures 1-2 | 12-13 |
| X | CN 1881652 A (SAMSUNG SDI CO., LTD.) 20 December 2006 (2006-12-20) description, page 5, line 14 to page 8, line 15, and figures 1-4 | 1, 2, 4, 5, 11, 14-17 |
| Y | CN 1881652 A (SAMSUNG SDI CO., LTD.) 20 December 2006 (2006-12-20) description, page 5, line 14 to page 8, line 15, and figures 1-4 | 3, 6-10, 12-13 |
| Y | CN 104282851 A (SAMSUNG SDI CO., LTD.) 14 January 2015 (2015-01-14) description, paragraphs 87-108, and figures 8-13 | 3 |

☑ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **25 August 2022** | **07 September 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/101822** |

**C.    DOCUMENTS CONSIDERED TO BE RELEVANT**

| Category* | Citation of document, with indication, where appropriate, of the relevant passages | Relevant to claim No. |
| --- | --- | --- |
| Y | JP H1167161 A (SHOWA ALUMINUM CORP.) 09 March 1999 (1999-03-09) <br> description, paragraphs 9-21, and figure 1 | 6-10 |
| Y | CN 206250261 U (NINGDE CONTEMPORARY AMPEREX TECHNOLOGY CO., LTD.) 13 June 2017 (2017-06-13) <br> description, paragraphs 27-49, and figures 1-9 | 12-13 |
| A | JP 2017188338 A (HITACHI AUTOMOTIVE SYSTEMS LTD.) 12 October 2017 (2017-10-12) <br> entire document | 1-17 |
| A | CN 101399322 A (HITACHI MAXELL LTD.) 01 April 2009 (2009-04-01) <br> entire document | 1-17 |

Form PCT/ISA/210 (second sheet) (January 2015)

**INTERNATIONAL SEARCH REPORT**
Information on patent family members

International application No.

**PCT/CN2022/101822**

| Patent document cited in search report | | | Publication date (day/month/year) | Patent family member(s) | | | Publication date (day/month/year) |
|---|---|---|---|---|---|---|---|
| JP | 2019084540 | A | 06 June 2019 | None | | | |
| CN | 211907489 | U | 10 November 2020 | None | | | |
| CN | 104685661 | A | 03 June 2015 | DE | 102012218188 | A1 | 10 April 2014 |
| | | | | WO | 2014053267 | A1 | 10 April 2014 |
| | | | | CN | 104685661 | B | 15 June 2018 |
| | | | | DE | 102012218188 | B4 | 02 September 2021 |
| JP | 2018190591 | A | 29 November 2018 | JP | 6872145 | B2 | 19 May 2021 |
| CN | 1881652 | A | 20 December 2006 | US | 2006263685 | A1 | 23 November 2006 |
| | | | | KR | 20060113815 | A | 03 November 2006 |
| | | | | JP | 2006310293 | A | 09 November 2006 |
| | | | | CN | 100474656 | C | 01 April 2009 |
| | | | | US | 7655353 | B2 | 02 February 2010 |
| | | | | KR | 100709834 | B1 | 23 April 2007 |
| | | | | JP | 4499683 | B2 | 07 July 2010 |
| CN | 104282851 | A | 14 January 2015 | US | 2015017520 | A1 | 15 January 2015 |
| | | | | KR | 20150007942 | A | 21 January 2015 |
| | | | | JP | 2015018810 | A | 29 January 2015 |
| | | | | EP | 2824729 | A1 | 14 January 2015 |
| | | | | CN | 104282851 | B | 14 June 2019 |
| | | | | US | 9716261 | B2 | 25 July 2017 |
| | | | | EP | 2824729 | B1 | 08 August 2018 |
| | | | | JP | 6523624 | B2 | 05 June 2019 |
| | | | | KR | 102246736 | B1 | 29 April 2021 |
| JP | H1167161 | A | 09 March 1999 | JP | 3876058 | B2 | 31 January 2007 |
| CN | 206250261 | U | 13 June 2017 | EP | 3331062 | A1 | 06 June 2018 |
| | | | | US | 2018159108 | A1 | 07 June 2018 |
| | | | | US | 2020119327 | A1 | 16 April 2020 |
| | | | | US | 10586971 | B2 | 10 March 2020 |
| | | | | US | 11121436 | B2 | 14 September 2021 |
| JP | 2017188338 | A | 12 October 2017 | None | | | |
| CN | 101399322 | A | 01 April 2009 | JP | 2009099542 | A | 07 May 2009 |
| | | | | US | 2009092860 | A1 | 09 April 2009 |
| | | | | KR | 20090032006 | A | 31 March 2009 |
| | | | | CN | 101399322 | B | 07 December 2011 |
| | | | | JP | 5306746 | B2 | 02 October 2013 |

Form PCT/ISA/210 (patent family annex) (January 2015)

**EP 4 243 167 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110995033